# EUROPEAN PATENT SPECIFICATION

(11) **EP 4 168 684 B1**
(45) Date of publication and mention of the grant of the patent: **02.07.2025**
(21) Application number: 21730791.7
(22) Date of filing: 07.06.2021
(51) Int. Cl.: F16D 13/70, F16D 13/72

(54) **A PLATE HAVING A VENTILATION CHANNEL**
PLATTE MIT BELÜFTUNGSKANAL
PLAQUE COMPRENANT UN CANAL DE VENTILATION

(30) Priority: 17.06.2020 TR 202009417
(43) Date of publication of application: 26.04.2023
(73) Proprietor: VALEO OTOMOTIV SANAYI VE TICARET ANONIM SIRKETI, 34854 Istanbul (TR)
(72) Inventor: ÇAKMAK, Tolga, 16245 Osmangazi 16245 Bursa (TR)
(74) Representative: Valeo Powertrain Systems
(86) International application number: PCT/EP2021/065096
(87) International publication number: WO 2021/254800

(56) References cited:
- CN-U- 204 755 644
- DE-A1- 19 930 966
- KR-B1- 101 613 021

## Description

### TECHNICAL FIELD

The present invention relates to a plate for use in friction clutches which provide movement transmission between the motor and the gear box in motorized vehicles.

### PRIOR ART

In automobiles, in the field of manual transmission, there are friction clutches positioned between the motor outlet of the combustion engine and the transmission shaft and which provide power transmission to the gearbox by means of friction link.

In manual transmission, the friction clutch generally comprises a cover fixed to the flywheel of the combustion engine, a plate linked in rotation with the cover and able to rub against a clutch disc. The friction clutch also comprises a diaphragm spring, which is of the Belleville type, said diaphragm spring is interposed axially between the cover and the plate and is able to press the plate onto the clutch disk.

In said friction clutches, ventilation channels are used onto the plate in order to eliminate the heat which occurs as a result of friction. The heat convection performances of said ventilation channels are tried to be increased in an effective manner as much as possible. The channels, formed for increasing heat transfer performance, lead to decrease of the explosion resistance of the related plate. Thus, a balance must be formed between the resistance of the plate and the cooling performance.

In the publication with number EP3225867B1, a plate for friction clutches is disclosed.

The ventilation channels provided on said plate are provided in curved form from the inner wall of the plate towards the outer wall and in different directions in a manner interrupting each other. Thus, cooling performance of the plate is improved by increasing air circulation in the ventilation channels. Documents DE19930966A1 , KR101613021B1 and CN204755644U show other examples of plates for friction clutches.

### BRIEF DESCRIPTION OF THE INVENTION

The present invention relates to a plate for friction clutches, for eliminating the above mentioned disadvantages and for bringing new advantages to the related technical field.

An object of the present invention is to provide a plate with increased cooling performance for friction clutches.

In order to realize all of the abovementioned objects and the objects which are to be deducted from the detailed description below, the present invention is a plate for use in a transmission member which provides movement transfer between the motor and the gear box in motorized vehicles, the subject matter plate comprising an annular body with a rotation axis delimited by a cylindrical inner wall and a cylindrical outer wall, and a friction surface and at least one ventilation channel extending radially from said cylindrical inner wall towards the cylindrical outer wall. According to the invention, a channel height in the axial direction, defined between a first wall of said ventilation channel and a second wall of the ventilation channel arranged axially opposite to the first wall, is provided in a form which firstly widens and afterwards narrows from the cylindrical inner wall towards the cylindrical outer wall.

According to the invention, said second wall is provided in the vicinity of said friction face where friction occurs on the plate.

According to the invention, at least one of the first wall and the second wall is provided in arc shape.

In a preferred embodiment of the invention, at least one of the first wall and the second wall is provided in concave form.

In a preferred embodiment of the invention, both of the first wall and the second wall are provided in concave form.

In a preferred embodiment of the invention, the diameter of the concave form of the second wall which is adjacent to the friction surface is smaller than the diameter of the concave form of the first wall.

In a preferred embodiment of the invention, a first channel height, defined at the side of the ventilation channel which is close to the inner wall, is greater than a second channel height defined at the side of the ventilation channel which is close to the outer wall.

In a preferred embodiment of the invention, the proportion of the first channel height to a maximum channel height, which defines the maximum height of the ventilation channel, is between 0.7 and 0.85.

In a preferred embodiment of the invention, the proportion of the first channel height to a maximum channel height, which defines the maximum height of the ventilation channel, is 0.78.

In a preferred embodiment of the invention, the proportion of the second channel height to a maximum channel height, which defines the maximum height of the ventilation channel, is between 0.50 and 0.65.

In a preferred embodiment of the invention, the proportion of the second channel height to the maximum channel height is 0.58.

In a preferred embodiment of the invention, in a plane perpendicular to the axis crossing the ventilation channel, the ventilation channel is provided in a curved manner from the cylindrical inner wall towards the cylindrical outer wall.

In a preferred embodiment of the invention, in a plane perpendicular to the axis crossing the ventilation channel, the ventilation channel is provided in a straight manner from the cylindrical inner wall towards the cylindrical outer wall.

In a preferred embodiment of the invention, in a plane perpendicular to the rotation axis crossing the ventilation channel, the ventilation channel is embodied in a manner having a channel width which increases from the cylindrical inner wall towards the cylindrical outer wall.

In a preferred embodiment of the invention, the plate is using cast iron material, for example Solid Solution Strengthened Ferritic Ductile Iron according to the European Standard EN 1563.

In a preferred embodiment of the invention, a plate incorporating all or part of the characteristics mentioned above is an inertia plate, said inertia plate comprising a bearing face arranged to press on a crankshaft of an internal combustion engine and a series of holes distributed angularly to the axis of rotation, the holes being arranged to allow fixing screws to pass.

A second object of the invention is a friction clutch comprising a cover, a diaphragm spring mounted inside of the cover and a plate incorporating all or part of the preceding characteristics, said plate comprising a circular support for providing linear contact with the diaphragm spring. The circular support can be continuous or discontinuous.

In a preferred embodiment of the invention, an added ring is provided between the cover and the diaphragm spring.

### BRIEF DESCRIPTION OF THE FIGURES

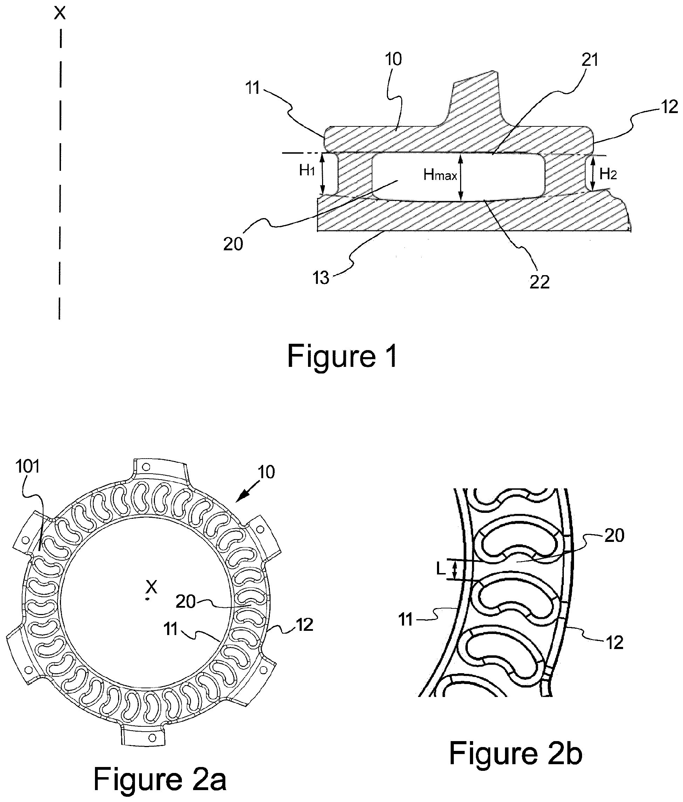

In Figure 1, a representative cross sectional view of the subject matter plate according to the invention is given.
In Figure 2a, another representative cross sectional view of the subject matter plate is given.
In Figure 2b, the detailed view of the representative cross section, given in Figure 2a, of the subject matter plate is given.
In Figure 3, the representative rotational speed-convention coefficient graphic of the prior art and the subject matter plate is given.
In Figure 4, the representative rotational speed-stress graphic of the prior art and the subject matter plate is given.
In Figures 5a and 5b, the representative isometric and cross sectional views in case the subject matter plate is a flywheel are given.
In Figures 6a and 6b, the cross sectional and the representative isometric views in case the subject matter plate is a tractor cover are given.
In Figures 7a and 7b, the cross sectional and the representative isometric views in case the subject matter plate is a clutch are given.
In Figure 8, a cross sectional view of a friction clutch according to the second object of the invention comprising the subject matter plate is given.

### DETAILED DESCRIPTION OF THE INVENTION

In this detailed description, the subject matter plate 10 is explained with references to examples without forming any restrictive effect only in order to make the subject more understandable.

In motorized vehicles, transmission members are used for providing movement transfer between the motor and the gearbox Said transmission member can be a friction clutch, a flywheel or a tractor cover.

On said transmission members, the subject matter plate 10 is used. Said plate 10 essentially has a circular body 101. Said circular body 101 rotates in a rotation axis X A face of the circular body 101 is defined as a friction face 13. Moreover, the circular body 101 has a cylindrical inner wall 11 and a cylindrical outer wall 12. There is at least one ventilation channel 20 for providing decreasing of the heat formed due to the friction which occurs on the friction face 13. Said ventilation channel 20 extends from the cylindrical inner wall 11 towards the cylindrical outer wall 12. In the subject matter plate 10; a channel height H which defines the height of the ventilation channel 20 in the rotation axis is provided in a form which firstly widens and which afterwards narrows towards the cylindrical outer wall 12. In other words, the ventilation channel 20 has a first wall 21 and a second wall 22 provided opposite to the first wall 21 in the direction of the rotation axis X Said second wall 22 is provided in the vicinity of the friction face 13. According to the present invention, at least one of the first wall 21 and the second wall 22 is provided in an arc form. In other words, at least one first wall 21 and the second wall 22 is provided in concave form. Thus, the channel height H of the ventilation channel 20 firstly widens and afterwards narrows from the cylindrical inner wall 11 towards the cylindrical outer wall 11. In other words, the ventilation channel 20 has a cross section which is similar to an airplane-wing. In a possible embodiment of the present invention, both of the first wall 21 and the second wall 22 are provided in concave form.

Thanks to said cross section of the ventilation channel 20, the speed of air which passes through the ventilation channel 20 is increased regionally. In other words, the concave form of the first wall 21 and/or of the second wall 22 provides more rapid movement of air in this region. Thus, in these parts, heat convection performance is increased.

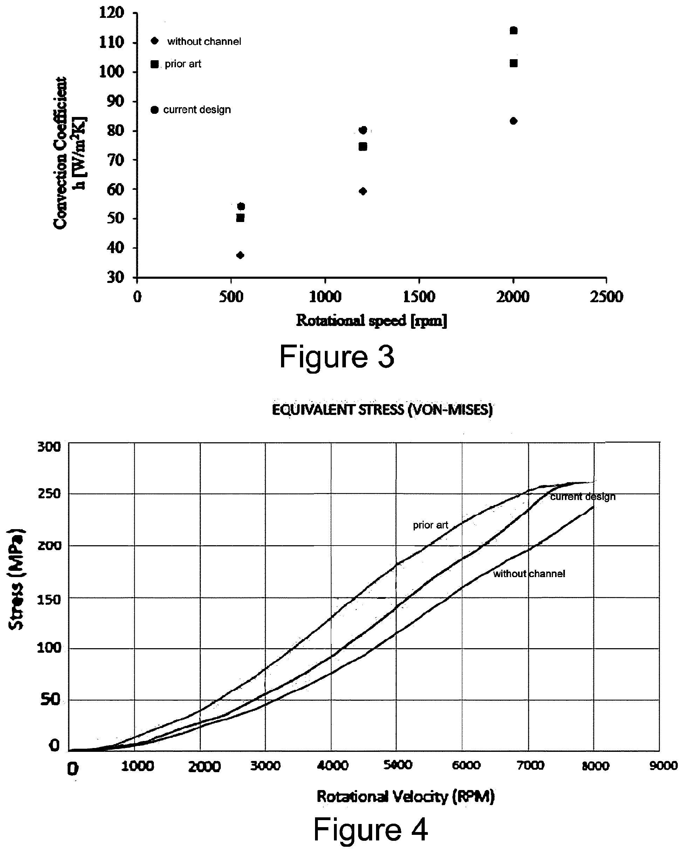

As can be seen in Figure 3, the heat convection performance which occurs depending on the rotation speed of the subject matter plate 10 becomes better when compared with plates without channels and when compared with the prior art. In other words, since the channel height is fixed in the prior art, regional speed change effect does not occur in the channel. In the subject matter plate, the change in the channel height leads to regional speed change and increase in the heat convection performance.

As can be seen in Figure 4, the stress value which occurs depending on the rotation speed is observed as minimum at the plates without channel. In other words, the explosion resistance under centrifugation of the plates without channel is higher. The explosion resistance of the subject matter plate (10) becomes better when compared with the prior art and approaches the explosion resistance of plates without channel.

Thus, by means of the subject matter plate 10, the explosion resistance can be kept at a sufficiently high level and at the same time, the cooling performance can be increased. Since the explosion resistance is higher when compared with the prior art, this shows that a lighter plate 10 which can be produced with less material can show the same explosion resistance and can have better cooling performance.

In a possible embodiment of the present invention, the curve diameter of the second wall 22 which is adjacent to the friction face 13 is provided to be smaller than the diameter of the first wall 21. Thus, the path, along which the air must move, at the second wall 22 side is greater and the air moves in a more rapid manner. Thus, at the friction face 13 side, in other words, at the part where heat occurs, a more effective cooling can be provided.

In another possible embodiment of the present invention, the height of the side of the ventilation channel 20 which is close to the cylindrical inner wall 11 is defined as a first channel height H1 and the height of the side which is close to the cylindrical outer wall 12 is defined as a second channel height H2. In said embodiment, the first channel height H1 is greater than the second channel height H2. Thus, air hits to the first wall 21 and to the second wall 22 and changes direction and the heat convection performance is increased.

In a possible embodiment of the present invention, the proportion of the first channel height H1 to a maximum channel height Hmax defined at the widest place of the ventilation channel 20 is between 0.7 and 0.85. In a possible embodiment of the present invention, it is 0.78.

In a possible embodiment of the present invention, the proportion of the second channel height H2 to the maximum channel height Hmax is between 0.5 and 0.65. In a possible embodiment of the present invention, it is 0.58.

In a possible embodiment of the present invention, at an orthogonal plane in the rotation axis X which passes through the ventilation channel 20, the ventilation channel 20 is provided in a curved form from the cylindrical inner wall 11 towards the cylindrical outer wall 12. Thus, heat convection performance is increased by providing guidance of air in the ventilation channel 20.

In another possible embodiment of the present invention, at an orthogonal plane in the rotation axis X which passes through the ventilation channel 20, the ventilation channel 20 is embodied to have a channel width L which increases from the cylindrical inner wall 11 towards the cylindrical outer wall 12.

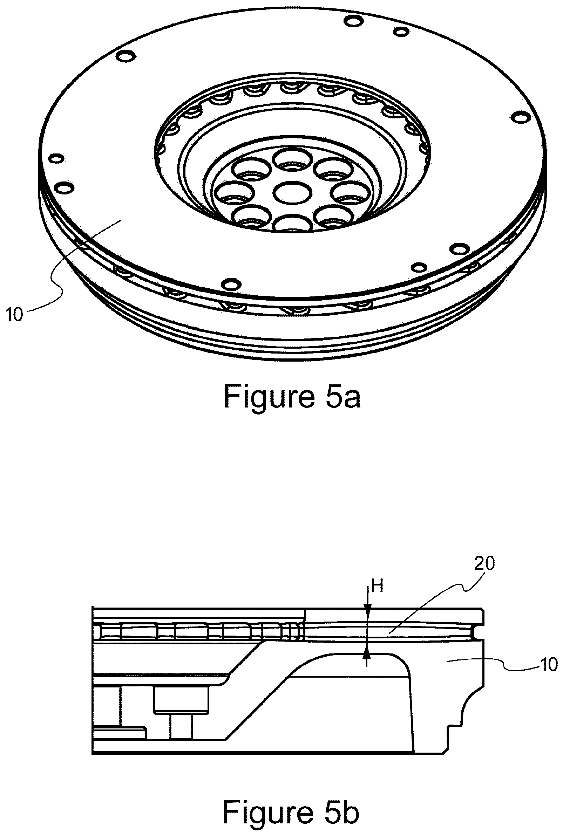

As can be seen in Figure 5a and 5b, the subject matter plate is provided as the component of a flywheel. The plate of said flywheel is provided in a circular form. There are ventilation channels between the cylindrical innerwall and the cylindrical outer wall of the circular plate.

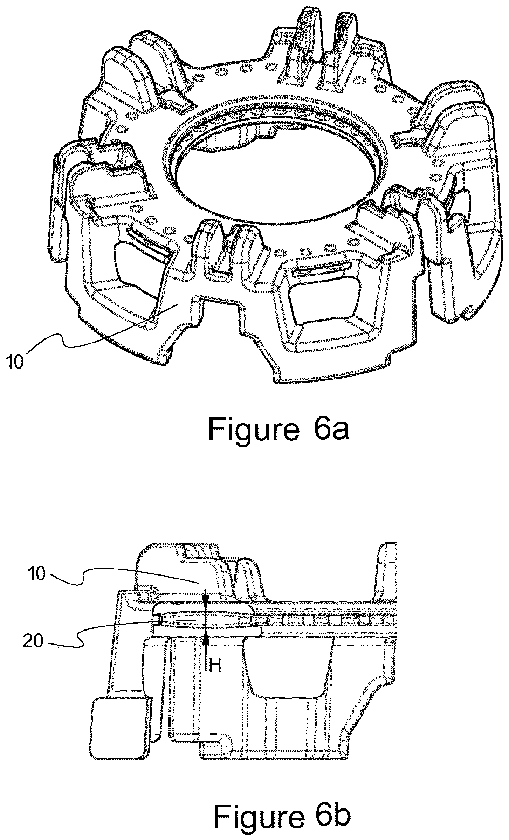

As can be seen in Figure 6a and 6b, the subject matter plate is provided as a component of a tractor cover. The plate of said tractor cover has a circular body whereon fingers are positioned. There are ventilation channels between the cylindrical inner wall and the cylindrical outer wall of the circular plate.

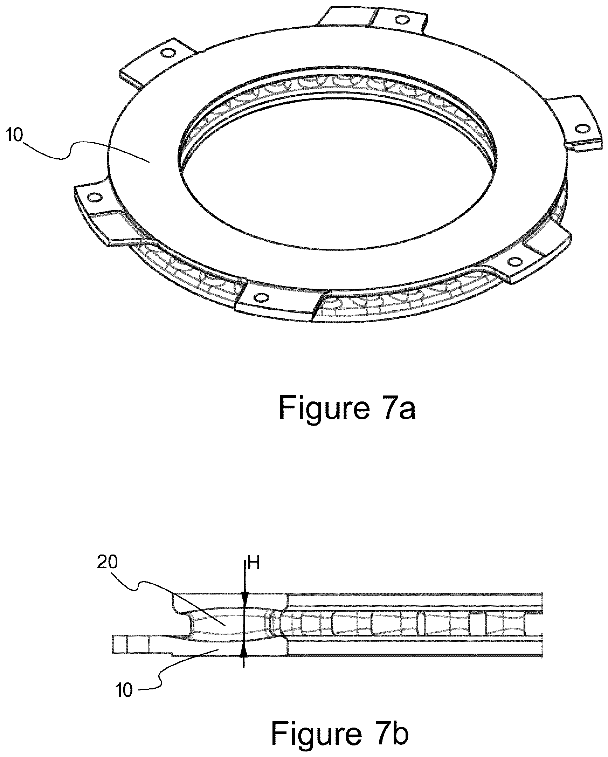

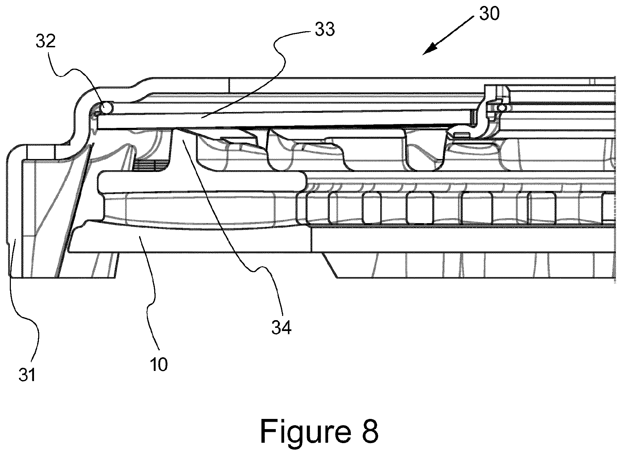

As can be seen in Figure 7a and 7b, the subject matter plate is provided as a component of a friction clutch. Figure 8 shows a friction clutch 30 comprising a cover 31 and a diaphragm spring 33 centered on the cover. The diaphragm spring bears onto a ring added onto a connecting zone of the cover. The cover can be attached by suitable fixing means to a flywheel or momentum wheel (not depicted), itself mounted on the output shaft of an engine, for example of the internal combustion engine type (not depicted).

The friction clutch 30 also comprises a plate 10, also called pressure plate, designed to come to bear against a clutch disc (not depicted). The plate 10 comprises a circular support 34 for providing linear contact with the diaphragm spring 33. This circular support 34 can be continuous or discontinuous.

During the disengaging and engaging of said friction disc 30, heat is created since friction occurs between the friction surface 13 of the plate 10 and the clutch disc. Since the heat, occurring as a result of the relative movement between the disc friction lining surface and the plate 10 according to the invention which is in contact therewith, will lead to temperature increase in the pressure plate. In order to evacuate the heat from the plate 10, the second wall 22 of the ventilation channel 20 is provided in the vicinity of the friction face 13. The distance separating the second wall 22 to the friction surface 13 is comprised between 3 to 12 mm.

The protection scope of the present invention is set forth in the annexed claims and cannot be restricted to the illustrative disclosures given above, under the detailed description. It is because a person skilled in the relevant art can obviously produce similar embodiments under the light of the foregoing disclosures, without departing from the annexed claims.

### REFERENCE NUMBERS

10 Plate
101 Annular body
11 Cylindrical inner wall
12 Cylindrical outer wall
13 Friction face
20 Ventilation channel
21 First wall
22 Second wall
30 Friction clutch
31 Cover
32 Added ring
33 Diaphragm spring
34 Circular support
H Channel height
H1 First channel height
H2 Second channel height
Hmax Maximum channel height
L Channel width
X Rotation axis

## Claims

1. A plate (10) for use in a transmission member which provides movement transfer between the motor and the gear box in motorized vehicles, the subject matter plate (10) comprising an annular body (101) with a rotation axis (X) delimited by a cylindrical inner wall (11) and an cylindrical outer wall (12), and a friction surface (13) and at least one ventilation channel (20) extending radially from said cylindrical inner wall (11) towards the cylindrical outer wall (12), **wherein** a channel height (H) in the axial direction, defined between a first wall (21) of said ventilation channel (20) and a second wall (22) of the ventilation channel (20) arranged axially opposite to the first wall (21), is provided in a form which firstly widens and afterwards narrows from the cylindrical inner wall (11) towards the cylindrical outer wall (12),
**wherein** said second wall (22) is provided in the vicinity of said friction face (13) where friction occurs on the plate (10,
**characterized in that** at least one of the first wall (21) and the second wall (22) is provided in arc shape.

2. The plate (10) according to claim 1, **wherein** at least one of the first wall (21) and the second wall (22) is provided in concave form.

3. The plate (10) according to claim 1, **wherein** both of the first wall (21) and the second wall (22) are provided in concave form.

4. The plate (10) according to claim 3, **wherein** the diameter of the concave form of the second wall (22) which is adjacent to the friction surface (13) is smaller than the diameter of the concave form of the first wall (21).

5. The plate (10) according to claim 1, **wherein** a first channel height (H1), defined at the side of the ventilation channel (20) which is close to the inner wall (11), is greater than a second channel height (H2) defined at the side of the ventilation channel (20) which is close to the outer wall (12).

6. The plate (10) according to claim 5, **wherein** the proportion of the first channel height (H1) to a maximum channel height (Hmax), which defines the maximum height of the ventilation channel (20), is between 0.7 and 0.85.

7. The plate (10) according to claim 5, **wherein** the proportion of the second channel height (H2) to a maximum channel height (Hmax), which defines the maximum height of the ventilation channel (20), is between 0.50 and 0.65.

8. The plate (10) according to claim 1, **wherein** in a plane perpendicular to the axis (X) crossing the ventilation channel (20), the ventilation channel (20) is provided in a curved manner from the cylindrical inner wall (11) towards the cylindrical outer wall (12).

9. The plate (10) according to claim 8, **wherein** in a plane perpendicular to the rotation axis (X) crossing the ventilation channel (20), the ventilation channel (20) is embodied in a manner having a channel width (L) which increases from the cylindrical inner wall (11) towards the cylindrical outer wall (12).

10. A plate according to any one of the claims 1 to 9, is an inertia plate, said inertia plate comprising a bearing face arranged to press on a crankshaft of an internal combustion engine and a series of holes distributed angularly to the axis of rotation (X), the holes being arranged to allow fixing screws to pass.

11. Friction clutch (30) comprising a cover (31), a diaphragm spring (33) mounted inside of the cover (31) and a plate (10) according to any one of the claims 1 to 9, said plate (10) comprising a circular support (34) for providing linear contact with the diaphragm spring (33) and an added ring (32) is provided between the cover (31) and said diaphragm spring (33).

## Patentansprüche

1. Platte (10) zur Verwendung in einem Übertragungselement, das einen Bewegungstransfer zwischen dem Motor und dem Getriebe in Kraftfahrzeugen bereitstellt, wobei die gegenständliche Platte (10) einen ringförmigen Körper (101) mit einer Drehachse (X), der durch eine zylindrische Innenwand (11) und eine zylindrische Außenwand (12) begrenzt ist, und eine Reibfläche (13) und mindestens einen Entlüftungskanal (20) umfasst, der sich radial von der zylindrischen Innenwand (11) zur zylindrischen Außenwand (12) hin erstreckt, wobei eine Kanalhöhe (H) in der axialen Richtung, die zwischen einer ersten Wand (21) des Entlüftungskanals (20) und einer zweiten Wand (22) des Entlüftungskanals (20), die axial gegenüber der ersten Wand (21) angeordnet ist, definiert ist, in einer Form bereitgestellt ist, die sich zunächst verbreitert und sich anschließend von der zylindrischen Innenwand (11) zur zylindrischen Außenwand (12) hin verschmälert, wobei die zweite Wand (22) in der Nähe der Reibfläche (13) bereitgestellt ist, wo eine Reibung auf der Platte (10) auftritt,
**dadurch gekennzeichnet, dass** die erste Wand (21) und/oder die zweite Wand (22) in einer Bogenform bereitgestellt ist.

2. Platte (10) nach Anspruch 1, wobei die erste Wand (21) und/oder die zweite Wand (22) in einer konkaven Form bereitgestellt ist.

3. Platte (10) nach Anspruch 1, wobei sowohl die erste Wand (21) als auch die zweite Wand (22) in einer konkaven Form bereitgestellt sind.

4. Platte (10) nach Anspruch 3, wobei der Durchmesser der konkaven Form der zweiten Wand (22), die an die Reibfläche (13) angrenzt, kleiner als der Durchmesser der konkaven Form der ersten Wand (21) ist.

5. Platte (10) nach Anspruch 1, wobei eine erste Kanalhöhe (H1), die auf der Seite des Entlüftungskanals (20) definiert ist, die sich nahe der Innenwand (11) befindet, größer als eine zweite Kanalhöhe (H2) ist, die auf der Seite des Entlüftungskanals (20) definiert ist, die sich nahe der Außenwand (12) befindet.

6. Platte (10) nach Anspruch 5, wobei das Verhältnis der ersten Kanalhöhe (H1) zu einer maximalen Kanalhöhe (Hmax), die die maximale Höhe des Entlüftungskanals (20) definiert, zwischen 0,7 und 0,85 liegt.

7. Platte (10) nach Anspruch 5, wobei das Verhältnis der zweiten Kanalhöhe (H2) zu einer maximalen Kanalhöhe (Hmax), die die maximale Höhe des Entlüftungskanals (20) definiert, zwischen 0,50 und 0,65 liegt.

8. Platte (10) nach Anspruch 1, wobei in einer Ebene senkrecht zu der den Entlüftungskanal (20) kreuzenden Achse (X) der Entlüftungskanal (20) von der zylindrischen Innenwand (11) zur zylindrischen Außenwand (12) hin gekrümmt bereitgestellt ist.

9. Platte (10) nach Anspruch 8, wobei in einer Ebene senkrecht zu der den Entlüftungskanal (20) kreuzenden Achse (X) der Entlüftungskanal (20) in einer Weise ausgeführt ist, dass er eine Kanalbreite (L) aufweist, die sich von der zylindrischen Innenwand (11) zur zylindrischen Außenwand (12) hin erhöht.

10. Platte nach einem der Ansprüche 1 bis 9, die eine Trägheitsplatte ist, wobei die Trägheitsplatte eine Lagerfläche, die zum Pressen auf eine Kurbelwelle einer Brennkraftmaschine angeordnet ist, und eine Reihe von Löchern umfasst, die abgewinkelt zur Drehachse (X) verteilt sind, wobei die Löcher so angeordnet sind, dass sie ein Hindurchgehen von Befestigungsschrauben ermöglichen.

11. Reibungskupplung (30), die eine Abdeckung (31), eine im Inneren der Abdeckung (31) montierte Membranfeder (33) und eine Platte (10) nach einem der Ansprüche 1 bis 9 umfasst, wobei die Platte (10) einen kreisförmigen Träger (34) zum Bereitstellen eines linearen Kontakts mit der Membranfeder (33) umfasst und ein zusätzlicher Ring (32) zwischen der Abdeckung (31) und der Membranfeder (33) bereitgestellt ist.

## Revendications

1. Plaque (10) destinée à être utilisée dans un organe de transmission qui assure le transfert de mouvement entre le moteur et la boîte de vitesses dans les véhicules motorisés, ladite plaque (10) comprenant un corps annulaire (101) avec un axe de rotation (X) délimité par une paroi intérieure cylindrique (11) et une paroi extérieure cylindrique (12), et une surface de frottement (13) et au moins un canal de ventilation (20) s'étendant radialement à partir de ladite paroi intérieure cylindrique (11) vers la paroi extérieure cylindrique (12), dans lequel une hauteur de canal (H) dans la direction axiale, définie entre une première paroi (21) dudit canal de ventilation (20) et une deuxième paroi (22) du canal de ventilation (20) disposée axialement à l'opposé de la première paroi (21), se présente sous une forme qui s'élargit d'abord et se rétrécit ensuite de la paroi intérieure cylindrique (11) vers la paroi extérieure cylindrique (12),
dans laquelle ladite deuxième paroi (22) est prévue à proximité de ladite surface de frottement (13) où se produit le frottement sur la plaque (10),
**caractérisée en ce qu'**au moins l'une de la première paroi (21) et de la deuxième paroi (22) a la forme d'un arc de cercle.

2. Plaque (10) selon la revendication 1, dans laquelle au moins l'une de la première paroi (21) et de la deuxième paroi (22) est de forme concave.

3. Plaque (10) selon la revendication 1, dans laquelle la première paroi (21) et la deuxième paroi (22) sont toutes deux de forme concave.

4. Plaque (10) selon la revendication 3, dans laquelle le diamètre de la forme concave de la deuxième paroi (22) adjacente à la surface de frottement (13) est inférieur au diamètre de la forme concave de la première paroi (21).

5. Plaque (10) selon la revendication 1, dans laquelle une première hauteur de canal (H1), définie du côté du canal de ventilation (20) qui est proche de la paroi intérieure (11), est supérieure à une deuxième hauteur de canal (H2) définie du côté du canal de ventilation (20) qui est proche de la paroi extérieure (12).

6. Plaque (10) selon la revendication 5, dans laquelle la proportion de la hauteur du premier canal (H1) par rapport à la hauteur maximale du canal (Hmax), qui définit la hauteur maximale du canal de ventilation (20), est comprise entre 0,7 et 0,85.

7. Plaque (10) selon la revendication 5, dans laquelle la proportion de la deuxième hauteur de canal (H2) par rapport à une hauteur maximale de canal (Hmax), qui définit la hauteur maximale du canal de ventilation (20), est comprise entre 0,50 et 0,65.

8. Plaque (10) selon la revendication 1, dans laquelle, dans un plan perpendiculaire à l'axe (X) traversant le canal d'aération (20), le canal d'aération (20) est incurvé de la paroi intérieure cylindrique (11) vers la paroi extérieure cylindrique (12).

9. Plaque (10) selon la revendication 8, dans laquelle, dans un plan perpendiculaire à l'axe de rotation (X) traversant le canal de ventilation (20), le canal de ventilation (20) est réalisé de manière à avoir une largeur de canal (L) qui augmente de la paroi intérieure cylindrique (11) vers la paroi extérieure cylindrique (12).

10. Plaque selon l'une des revendications 1 à 9, est une plaque d'inertie, ladite plaque d'inertie comprenant une face d'appui agencée pour appuyer sur un vilebrequin d'un moteur à combustion interne et une série de trous répartis angulairement par rapport à l'axe de rotation (X), les trous étant agencés pour permettre le passage de vis de fixation.

11. Embrayage à friction (30), comprenant un couvercle (31), un ressort à diaphragme (33) monté à l'intérieur du couvercle (31) et une plaque (10) selon l'une quelconque des revendications 1 à 9, ladite plaque (10) comprenant un support circulaire (34) pour assurer un contact linéaire avec le ressort à diaphragme (33) et une bague rapportée (32) est prévue entre le couvercle (31) et ledit ressort à diaphragme (33).
